# EUROPÄISCHE PATENTANMELDUNG

(11) **EP 1 300 750 A1**
(43) Veröffentlichungstag der Anmeldung: **09.04.2003**
(21) Anmeldenummer: 01123324.4
(22) Anmeldetag: 08.10.2001
(51) Int. Cl.: G06F 1/16

(54) **Tragbares Informations- und Datenverarbeitungsgerät mit selbsteinstellenden Betriebsmodi**

(71) Anmelder: Siemens Schweiz AG, 8047 Zürich (CH)
(72) Erfinder: Wittlinger, Christoph, 8047 Zürich (CH)

(57) **Zusammenfassung**

Erfindungsgemäss ist ein tragbares Informations- und Datenverarbeitungsgerät (2), welches die folgenden über ein Bussystem (20) kommunizierenden Komponenten aufweist, vprgesehen:
a) einen zur permanenten oder temporären Ablage von Daten vorgesehenen Speicher (12, 14),
b) einen zur Verarbeitung von Daten vorgesehenen Prozessor (8, 10),
c) einen über die Oberfläche bedienbaren und an die Darstellung von ganzen Internet-Seiten weitgehend grössenangepassten Flachbildschirm (16),
d) eine Energieversorgung mit einem Energiespeicher (38),
e) Kontaktelemente (57, 57', 58, 58', 72, 74) und periphere Schnittstellen (IRDA, PCMCIA, USB) zu externen Einheiten (84), und
f) wenigstens eine Sende-/Empfangseinheit (30) für eine drahtlose Datenübertragung,
wobei das tragbare Informations- und Datenverarbeitungsgerät (2) für sich allein offline zumindest mit PDA-Funktionalität betreibbar ist, und wobei das tragbare Informations- und Datenverarbeitungsgerät (2) an eine oder mehrere der externen Einheiten (84) ankoppelbar ist und abhängig von an den peripheren Schnittstellen (IRDA, PCMCIA, USB) angekoppelten externen Einheiten (84) und/oder abhängig von an den Kontaktelementen (57, 57', 58, 58', 72, 74) angekoppelten externen Einheiten (84) und/oder abhängig von den mit der Sende-/Empfangseinheit (30) kommunizierenden externen Einheiten sowie der von diesen externen Einheiten (84) adressierten Daten im Speicher (12, 14) vordefinierte Betriebmodi des tragbaren Informations- und Datenverarbeitungsgeräts (2) einstellbar sind.

## Beschreibung

Die Erfindung bezieht sich auf ein tragbares Informationsund Datenverarbeitungsgerät, welches die folgenden über ein Bussystem kommunizierenden Komponenten umfasst:
a) einen zur permanenten oder temporären Ablage von Daten vorgesehenen Speicher,
b) einen zur Verarbeitung von Daten vorgesehenen Prozessor,
c) einen über die Oberfläche bedienbaren und an die Darstellung von ganzen Internet-Seiten weitgehend grössenangepassten Flachbildschirm,
d) eine Energieversorgung mit einem Energiespeicher,
e) Kontaktelemente und periphere Schnittstellen zu externen Einheiten, und
f) wenigstens eine Sende-/Empfangseinheit für eine drahtlose Datenübertragung.

In der europäischen Patentanmeldung EP 0 737 908 A1 ist ein tragbares Informationsgerät offenbart, das wahlweise mit einem Kabel oder drahtlos an ein wie auch immer geartetes Datenverarbeitungssystem angekoppelt werden kann. Mit diesem Gerät ist es dann ermöglicht, Zustanddaten des Datenverarbeitungssystems zu betrachten und per Fernbetriebstechnik (Remote-Control) in diesem Datenverarbeitungssystem vorliegende Fehler analysieren und korrigieren zu können. Nachteilig ist es bei dem dort offenbarten Gerät, dass es nur auf wenige und speziell dafür vorgesehene Datenverarbeitungsgeräte anwendbar ist.

Ein in dem amerikanischen Patent 5,812,930 offenbartes Informationsgerät vermeidet diesen Nachteil, weil es bei diesem Gerät der zentrale Erfindungsgedanke ist, über mindestens einen unidirektionalen breitbandigen und mindestens einen bidirektionalen schmalbandigen Übertragungkanal zu verfügen. Dabei ist es ein zwingendes Feature der dort offenbarten Erfindung, dass das Informationsgerät in Abhängigkeit von der zu übertragenden und/oder zu empfangenden Information selbst entscheidet über welche der vorhandenen Übertragungskanäle der Datentransfer vorgenommen wird. Es ist so durch die Verwendung von standardisierten Übertragungsprotokollen, wie z.B. TCP/IP, möglich, das Informationsgerät an verschiedene externe Geräte, die an einem entsprechenden Netzwerk angeschlossen sind, anzukoppeln. Ebenso erlaubt dieses Informationsgerät die Darstellung von TV-Programmen und von einer in einem externen System vorhandenen Video- oder DVD-Cassette, deren Daten bestimmungsgemäss nur über den breitbandigen Übertragungskanal zugeführt werden können.

Nachteilig ist auch bei diesem Informationsgerät, dass der eingesetzte Bildschirm, heute in der Regel ein LCD-Bildschirm, vergleichsweise teuer ist und dass das Informationsgerät nur über eine sehr stark begrenzte Fähigkeit verfügt, als Datenverarbeitungsgerät zu dienen.

Der Erfindung liegt daher die Aufgabe zugrunde, ein tragbares Informations- und Datenverarbeitungsgerät anzugeben, dass sich durch seinen hohen praktischen Nutzen, seine vielfältige Anwendbarkeit und seine einfache Bedienbarkeit auszeichnet.

Diese Aufgabe wird erfindungsgemäss dadurch gelöst, dass ein tragbares Informations- und Datenverarbeitungsgerät vorgesehen ist, welches die folgenden über ein Bussystem kommunizierenden Komponenten umfasst:
a) einen zur permanenten oder temporären Ablage von Daten vorgesehenen Speicher,
b) einen zur Verarbeitung von Daten vorgesehenen Prozessor,
c) einen über die Oberfläche bedienbaren und an die Darstellung von ganzen Internet-Seiten weitgehend grössenangepassten Flachbildschirm,
d) eine Energieversorgung mit einem Energiespeicher,
e) Kontaktelemente und periphere Schnittstellen zu externen Einheiten, und
f) wenigstens eine Sende-/Empfangseinheit für eine drahtlose Datenübertragung,
wobei das tragbare Informations- und Datenverarbeitungsgerät für sich allein offline zumindest mit PDA-Funktionalität betreibbar ist, und wobei das tragbare Informations- und Datenverarbeitungsgerät an eine oder mehrere der externen Einheiten ankoppelbar ist und abhängig von an den peripheren Schnittstellen angekoppelten externen Einheiten und/oder abhängig von an den Kontaktelementen angekoppelten externen Einheiten und/oder abhängig von den mit der
Sende/Empfangseinheit kommunizierenden externen Einheiten und/oder der von diesen externen Einheiten adressierten Daten im Speicher vordefinierte Betriebmodi des tragbaren Informations- und Datenverarbeitungsgeräts selbsttätig einstellbar sind.

Auf diese Weise gelingt es, eine vergleichsweise hohe Rechenleistung (mittels stromsparender RISC-Prozessoren, z.B. mit ARM-Architektur, wie StrongARM/Xscale, der Firma Intel möglich) mit vergleichsweise hohem lokalen Speicher zu ermöglichen, die es erlaubt, dass Gerät in vielfältiger Ankopplung in verschiedenen Betriebsmodi an verschiedenen externen Einheiten anzukoppeln. Zusätzlich zu diesem RISC-Prozessor kann ergänzend ein Grafik-Prozessor und/oder ein MPEG-fähiger Prozessor vorgesehen sein. Mit dem Begriff des Prozessor im unabhängigen Patentanspruch sei daher auch immer ein fallmässig vorgesehenes Ensemble von einzelnen Prozessoren gemeint. Besonders herausragend ist die besonders einfach bedienbare mehrfache Nutzung des Geräts ohne Neukonfigurierung des Geräts selbst und der Umgebung (Netz, Netzwerk) durch das intelligente Management der Betriebsmodi (easy to use). Entsprechend der Analysefähigkeit des Geräts, in welchem Umfeld es betrieben wird, erfolgt die entsprechende Selbstkonfiguration ohne dass der Benutzer dies selbst initiieren müsste und ohne dass der Benutzer davon Kenntnis nehmen müsste. Mit den voranstehend genannten Begriffen des Umfeldes oder der Umgebung ist einfach gemeint, mit welchen weiteren externen Geräte das Gerät verbunden ist, welche peripheren Schnittstellen aktuell aktiv beschaltet sind, welche Art von Daten über die Sende/Empfangseinheit im besonderen empfangen werden, welche Prozesse von dem Benutzer aufgerufen werden usw.

Für das tragbare Informations- und Datenverarbeitungsgerät ist eine besonders hohe Funktionalität gegeben, wenn die Betriebsmodi Standalone-Mode, Standby-Mode, Screen-Mode, Terminal-Mode, Movie-Mode, Communicator-Mode, E-Book-Mode, Travel-Mode und Game-Mode einstellbar sind.

Im Einzelnen bedeutet der Standalone-Mode dabei das autarke Betreiben des Geräts ohne eine drahtlose Anbindung an ein Kommunikationsnetz. In diesem Mode ist zumindest eine PDA-Funktionalität (Personal Digital Assistent, sogenannte Palms) gewährleistet. Auch können mit dem Gerät in diesem Mode Lernprogramme genutzt werden und eine Notizblockfunktionalität erzielt sein. Mit der Ankopplung an ein Modem ergeben sich zusätzlich eine Email-Funktion, eine WebBrowser-Funktion und eine VoIP-Funktion (Voice over Internet Protocol).

Im Stand-By-Mode ist das Gerät quasi ausgeschaltet und ruht in dem zuletzt eingestellten Mode bis eine Benutzeranforderung oder eine von extern empfangene Information eingeht. In diesem Mode befindet sich das Gerät auch, wenn nur der Energiespeicher des Geräts aufgeladen wird.

Im Screen-Mode arbeitet das Gerät wie ein Bildschirm für ein anderes Datenverarbeitungsgerät. So ist beispielsweise für einen Personal Computer die vergleichsweise teure Anschaffung eine separaten Flachbildschirms verzichtbar, weil der LCD-Flachbildschirm dieses Geräts qualitativ hochwertig wie ein bekannter LCD-Bildschirm ist und daher für diese Zwecke nutzbar ist.

In einem weiteren Mode (Terminal-Mode) wird das Gerät als Terminal benutzt. Über den berühungssensitiven Flachbildschirm - berührungssensitiv ist hierbei im gesamten Kontext im Sinne von über die Oberfläche bedienbar zu verstehen - können entweder direkt mit der Graffiti-Schriftart oder mit einer auf dem Flachbildschirm einblendbaren Tastatur benutzerseitige Eingaben vorgenommen werden. Wahlweise kann für die Anzeige der Flachbildschirm des Geräts oder ein Datensichtgerät eines anderen Datenverarbeitungsgeräts genutzt werden. Bedingt durch die mögliche kabellose Anbindung an einen Server-Rechner können so beispielsweise mehrere Benutzer, die je mit einem erfindungsgemässen Gerät ausgestattet sind, innerhalb der Übertragungsreichweite auf die Resourcen eines Server-Rechners zugreifen, was ganz bedeutend zur Senkung von IT-Betriebskosten beiträgt, weil auf diese Weise eine erheblich geringere Anzahl von beispielsweise in einem LAN-Netzwerk eingebundenen Personal-Computern oder Laptops administriert werden muss.

Im Movie-Mode steht eindeutig der Empfang breitbandiger Signale im Vordergrund der Aktivität, um auf dem Flachbildschirm Fernseh- und/oder Videobilder anzeigen zu können. Die für diesen Mode erforderlichen Daten können jedoch auch von lokalen Flash-Speichern, einer steckbaren Harddisk oder einem mobilen DVD-Player stammen.

Der oben erwähnte Communicator-Mode bietet die gesamte Funktionalität eines mobilen Telefons in DECT, GSM oder UMTS-Funktion und zusätzlich Fax-Empfang und über ein USB-Port auch die Versendung von Telekopien. Zu diesem Zweck verfügt das Gerät auch über einen eingebauten Lautsprecher und ein eingebautes Mikrofon und/oder über ein an das Gerät ankoppelbares mobiles Freisprechset. Diese Komponenten können auch für die Verwendung von Programmen und Diensten genutzt werden, die eine Spracherkennung (Speach Voice Recognition) unterstützen. Zugleich kann auch eine Bilddarstellung und/oder Bildübertragung erzielt werden, wenn das Gerät über eine Kamera verfügt. Dabei kann die Kamera, vorzugsweise in CCD-Technik, auch an einer peripheren Schnittstelle als Zubehörteil ankoppelbar oder auch fest im Gehäuse des Geräts integriert sein.

Im sogenannten E-Book-Mode dient das Gerät einfach zur Darstellung von Buchseiten, die entweder drahtlos kontinuierlich übertragen werden können oder aber einmalig im Speicher abgelegt und dann aufgerufen werden. Durch die in etwa mit einem Buch vergleichbare leichte Handhabbarkeit des Geräts wird dem Nutzer so das Mitführen seines vergleichsweise schweren papiernen Lesestoffs erspart.

Im Travel-Mode kann ein optional anschliessbares oder auch fest integriertes GPS-Modul die Basis dafür schaffen, dass mit dem Gerät sogenannte Location-based Services, wie z.B. Reisekartendarstellung, Reiseführer, Event-Driven-Messaging, genutzt werden können. In diesem Mode ist das Gerät auch als mobiles Navigationsgerät in privaten Fahrzeugen und/oder öffentlichen Verkehrsmitteln nutzbar. Ebenso ist es denkbar, in geschlossenen Gebäuden, wie Museen, Galerien usw., in den das GPS-Modul nicht verbindungsaktiv sein kann, ebenfalls vom Standort abhängige Informationen zu beziehen. Als Kommunikationsmedium sind dabei Bluetooth, Transponder oder Infrarot-Übertragung beispielhaft genannt. Dabei ist besonders der Transponder in Gebäuden geeignet, um Objekte, Ausstellungsbereiche und/oder Ausstellungsstücke zu identifizieren und die entsprechende Informationsanzeige und/oder -ansage zu veranlassen.

Im in der obigen Aufzählung letztgenannten Mode (Game-Mode) eignet sich das Gerät ganz besonders für die Ausführung von Spielen mit interaktiven Bedienhandlungen. Auch hierbei zeichnet sich das Gerät aufgrund des eingebauten LCD-Flachbildschirms ganz besonders durch seinen hohen Benutzerwert aus, weil es zudem mit dieser Möglichkeit der hochwertigen graphischen Darstellung die leichte Handhabbarkeit und Mobilität bei geringem Gerätegewicht verbindet.

Um die im Energiespeicher zur Verfügung stehende elektrische Energie besonders ökonomisch zu verwenden, ist es vorgesehen, nur die im jeweiligen Mode benötigten Komponenten des Geräts aktiv zu schalten. Hierzu kann es weiter vorgesehen sein, dass die in einem bestimmten Betriebsmodus nicht benötigten Komponenten mittels einer nicht selber am Bussystem angeschlossenen Steuerlogik hochohmig von Bussystem abschaltbar sind.

Die selbstkonfigurierende Einstellung des Geräts wird im Standby-Mode besonders gut unterstützt, indem sich der Betriebsmodus "Standby" einstellt, wenn das tragbare Informations- und Datenverarbeitungsgerät mit einer Ladevorrichtung verbunden ist und der Energiespeicher entweder über mit der Ladevorrichtung kommunizierende Kontakte oder induktiv aufgeladen wird. Hierzu wird erläuternd ausgeführt, dass das den Standby-Mode initiierende Ergeignis beispielsweise das Anliegen der Ladespannung an den Kontakten sein kann oder auch das Anliegen einer induzierten Spannung an einem Ladestromkreis im Geräteinnern. Damit ist es jedoch nicht ausgeschlossen, dass das Gerät während des Ladevorgangs auch in einem anderen Mode betrieben werden kann, beispielsweise als elektronischer Bilderrahmen, in dem Fotos, Werbung oder ein Kalender anzeigbar sind. Andersherum gesagt, ist der Zustand des Ladens ohne weitere Benutzeranforderungen nicht der einzige mögliche Zustand für das Einstellen des Standby-Modes. Vielmehr führt jede Unterbrechung der aktuellen Tätigkeit mit dem Gerät nach einer vorgebbaren Zeit zur Einstellung des Standby-Modes, wie dies beispielsweise auch beim Einschalten eines Bildschirmschoners bei einem Personal Computer der Fall ist.

Ein dem vorangehend genannten Mechanismus ähnlicher Vorgang führt zur Erkennung des Screen-Modes, indem dieser Betriebsmodus eingestellt wird, wenn das tragbare Informations- und Datenverarbeitungsgerät auf einen Ständer aufsetzbar ist und durch mit dem Ständer kommunizierende Kontakte oder induktive oder kapazitive Ankopplung der in den Ständer eingestellte Zustand des Geräts vom Gerät selbst detektierbar ist.

Auch hierbei wird der Modus durch das blosse Einstellen des Geräts in den Ständer gestartet, wobei dieser Ständer vorzugsweise auch als Ladestation ausgebildet ist. Auch dieser Modus kann es zulassen, dass das Gerät mindestens in einem weiteren Mode betrieben werden kann, beispielsweise ist es ohne weiteres denkbar, das Gerät im Screen-Mode vorübergehend auch parallel dazu im Communicator-Mode zu betreiben, beispielsweise um eine Telefontastatur am Flachbildschirm über das angezeigte Bild einzublenden, einen Anschluss anzuwählen und anschliessend die Sprachtelefonie abzuwickeln.

Um die Datenübertragung auf das Gerät, d.h. ja eigentlich auf den Flachbildschirm, in diesem Mode besonders einfach herstellen zu können, kann der vorstehend genannte Ständer selbst mit einer Datenverarbeitungsanlage verbunden sein und die über eine Schnittstelle von der Datenverarbeitungsanlage erhaltenen Daten für die Darstellung auf dem Flachbildschirm vom Ständer über eine periphere Schnittstelle an das tragbare Informations- und Datenverarbeitungsgerät übertragen werden.

Auch hierbei ist in Bezug auf die Selbsteinstellung des Geräts anzufügen, dass sich das Gerät in dem im Ständer eingestellten Zustand erst dann in den Screen-Mode schaltet, wenn an der Schnittstelle Daten anliegen. Das Einstellen in den Ständer schaltet das Gerät quasi in eine Screen-Standby-Mode, in dem das Gerät natürlich auch - wie voranstehend schon erläutert - aufgeladen oder als Freisprechtelefon, optional mit Bildempfang und/oder -übertragung, genutzt werden kann.

Alternativ zur der Datenübertragung mit dem Ständer als zwischengeschaltetem Element, das zudem auch noch zusätzlichen Speicher zu Verfügung stellen könnte, können die von einer Datenverarbeitungsanlage für eine Darstellung auf dem Flachbildschirm vorgesehenen Daten auch drahtlos übermittelt werden und dabei vorzugsweise über die Sende/Empfangseinheit transferierbar sein.

Ein weitere bisher nicht annähernd bekannte zusätzliche Funktionalität für das Gerät ergibt sich, wenn der Ständer und das tragbare Informations- und Datenverarbeitungsgerät miteinander kommunizierende mechanische Aufnahmeelemente aufweisen, wobei der Ständer in Form von an einem Laptop angebrachten Scharnierteilen realisiert ist. Auf diese Weise kann das Gerät den aufklappbaren Deckel von einem Laptop oder Notebook oder dergleichen darstellen und durch Entfernen aus dieser mechanischen Verbindung auch wieder autark betrieben werden. Bei dieser Variante könnten über diese mechanische Verbindung zugleich elektrische Energie und auch die zur Bildschirmdarstellung vorgesehenen Daten übertragen werden. Alternativ könnte die Datenübertragung auch drahtlos, z.B. über die Sende/Empfangseinheit oder eine andere Schnittstelle mit ausreichender Datenübertragungsrate vorgenommen werden.

Diese vorstehend beschriebene Betrachtungsweise ist natürlich auch anwendbar, wenn der Ständer und das tragbare Informations- und Datenverarbeitungsgerät miteinander kommunizierende mechanische Aufnahmeelemente aufweisen, wobei der Ständer in Form von an einem Personal-Computer oder dergleichen angebrachten Aufnahmeteilen realisiert ist.

Dabei ist es zur Erweiterung der Fähigkeiten der voranstehend genannten Geräte natürlich auch besonders zweckmässig, wenn das Gerät es ermöglicht, dass der Laptop bzw. der Personal Computer auf Ressourcen des tragbaren Informations- und Datenverarbeitungsgeräts, wie z.B. auf den Prozessor, auf den Speicher, auf die Grafikkarte, auf die periphere Schnittstelle und auf die Sende/Empfangseinheit, zugreifen kann. Auch hierbei ergeben sich wieder signifikante Synergien im Vergleich zu zwei einzelnen jedes für sich vollkommen selbständig betreibbaren Geräten.

In besonders zweckmässiger Ausgestaltung der Erfindung ist es vorgesehen, in den Betriebsmodi Terminal-Mode und Movie-Mode die Datenübertragung über die Sende-/Empfangseinheit erfolgen zu lassen, welche nach einem Übertragungsverfahren gemäss einer Spezifikation IEEE 802.11 arbeitet. Eine weitere besonders zweckmässige Ausgestaltung sieht es vor, die Empfangseinheit so zu konfigurieren, dass im Betriebsmodus Movie-Mode ein MPEG-4 codiertes Video-Signal oder ein von MPEG-4 abgeleitetes Videosignal übertragbar ist. Entsprechend kann auch die Übertragung eines MPEG-2 codierten Signals vorgesehen sein, was gegenüber dem MPEG-4 Vorteile bei der Übertragung von TV-Daten und im Broadcast-Verkehr aufweist. Dabei ist besonders ein SVGA TFT-Display hinsichtlich seiner Auflösung (600x800) besonders für diesen Verwendungszweck geeignet. Darüberhinaus erlaubt die TFT-Technologie die Darstellung bewegter Bilder mit einer für das menschliche Auge nicht mehr auflösbaren Frequenz.

Um im besonderen die Darstellung von Echtzeit-Daten im Movie-Mode sicherstellen zu können, kann es vorgesehen sein, dass im Betriebsmodus Movie-Mode die übertragenen Daten in zumindest einem Teilvolumen des Datenspeichers, vorzugsweise nach First-In/First-Out-Prinzip, zwischenspeicherbar sind. Auf diese Weise kann der im Gerät vorhandene Speicher, der zu diesem Zweck explizit im Video-Mode zur Verfügung gestellt werden kann, genutzt werden um den Verlauf der an das Gerät gesendeten Daten zu glätten. Dabei kann z.B. eine Übertragung nach HyperLAN (IEEE 802.11) mit einer Bitrate von netto etwa 5 Mbit/s erfolgen, die aber im wesentlichen zwischen 2 und 8 Mbit/s schwanken kann und somit bei fehlendem buffering zu mit dem menschlichen Auge wahrnehmbaren Bildfrequenzschwankungen führen könnte. Auf diese Weise können die Daten für beispielsweise 15 Sekunden Videobilder zwischengespeichert werden, was bei einer angenommenen Übertragungsrate von 8 Mbps ein Speichervolumen von etwa 15 MB erforderlich macht, was der auf dem Gerät befindliche Speicher kapazitätsmässig leicht zu Verfügung stellen kann.

Ein weiteres besonders vorteilhaftes Feature ergibt sich, wenn die Sende-/Empfangseinheit einen Empfangsteil für terristisch abgestrahlte TV-Programme und/oder für DVBT-Daten (Digital Video Broadcast Terrestical) umfasst.

Um dem Benutzer des tragbaren Informations- und Datenverarbeitungsgeräts eine besonders gute grafische Darstellung liefern zu können, kann der Flächeninhalt des über die Oberfläche bedienbaren Flachbildschirms, der z.B. berührungssentiv oder mit resistiv wirksamen Pen bedienbar ist, mindestens 80% einer einem Gerätebenutzer zuwendbaren Gerätequerschnittsfläche betragen. Dabei meint der über die Oberfläche bedienbare Flachbildschirme technologisch sehr unterschiedliche Konzepte, denen jedoch das sogenannte Pen-Computing gemeinsam ist. Grundsätzlich können neben dem resistiv ausgestalteten Display auch mit dem Touchverfahren bedienbare Bildschirme mit kapazitiver, Infra-Rot- oder Ultraschall-Sensitivität vorgesehen sein.

Die so noch vorhandenen übrigen Gerätebereiche geben dem Benutzer das nicht zu unterschätzende Gefühl, das Gerät noch gut halten und bedienen zu können. Im besonderen für die Darstellung von aus dem Internet ladbaren Inhalten ist diese Grössenverteilung jedoch ausreichend, um die Internetseiten im wesentlichen vollständig auf dem Flachbildschirm darstellen zu können.

Dabei ist immer im Gedächtnis zu behalten, dass die Grösse des Displays und damit des gesamten Geräts nicht beliebig weit angehoben werden kann, sondern ein bestmöglicher Kompromiss aus Übersichtlichkeit der Darstellung (führt eher zu einem vergleichweise grösseren Display) und Kosten des Displays und Handhabbarkeit des Geräts (führt eher zu einem vergleichsweise kleineren Display). In dieser Abschätzung erscheinen Display-Grössen für LCD-Flachbildschirme von etwa 7 bis 14 Zoll als sehr geeignet. Dabei liegt eine typische Bildschirmauflösung SVGA (600x800) oder VGA (480x640) oder XGA (768x1024) vor.

Ein weiteres besonders auch für die Verwendung des Geräts zum Lesen von Dokumenten vorteilhaftes Merkmal sieht es vor, dass der Gerätequerschnitt und der berührungssensitive Flachbildschirm im wesentlichen rechteckig ausgebildet sind und Mittel vorgesehen sind, die Ausrichtung des Flachbildschirms festzustellen und so die auf dem Flachbildschirm gewählte Darstellung ohne Benutzerinteraktion entsprechend der Ausrichtung des Flachbildschirms im Queroder Hochformat anzuzeigen. Dieses Feature ist zum Beispiel bei dem Betrieb des Geräts im E-Book-Mode denkbar. Hier ist es dem Benutzer ermöglicht durch das Drehen der längeren Seitenkante des Flachbildschirms in Y-Richtung die Darstellung ganzer Buchseiten im Hochformat auf dem Flachbildschirm zu erzielen. Reicht dagegen die Ausrichtung der längeren Seitenkante in X-Richtung aus, so kann eine Seite oder auch zwei Seiten nebeneinander im Querformat dargestellt werden.

Um nun besonders einfach erkennen zu können, ob die Darstellung mit "stehendem" Flachbildschirm und Hochformat oder mit "liegendem" Flachbildschirm im Querformat erfolgen soll, können die Mittel ein schwerkraftsensitiver Sensor oder am Geräterand angeordnete Kontaktelemente sein, wobei entweder die Lage des Sensors und/oder die Beschaltung der entsprechenden Kontakte die Ausrichtung des Geräts erkennbar machen lässt und dementsprechend die Ausrichtung der Darstellung auf dem Flachbildschirm ausgelöst wird. Dabei kann eine im Gehäuse angeordnete Taumelscheibe für die einfache Navigation durch den Bildschirmausschnitt verwendet werden. Die Navigation "Up, Down, Right, Left" ist durch die Verwendung der Taumelscheibe selbsterklärend. Eine Zoom-Funktion "Zoom In/Zoom Out" kann beispielsweise erzielt werden, indem die Taumelscheibe auf Berührungsdruck im mittleren Bereich anspricht. Leichter Druck kann so die Funktion "Zoom In" auslösen; entsprechend stärkerer Druck die Funktion "Zoom Out" oder auch umgekehrt. Zudem können die Bereiche für die Navigation "Up, Down, Right, Left" der Taumelscheibe über eine mindestens zweistufige Druckdetektion verfügen, so dass unterschiedliche Navigationsgeschwindigkeiten erzielt werden können. Die Taumelscheibe wird dabei rechts oben angeordnet, so dass eine ergonomisch einfache Bedienung im Quer- und Hochformat möglich ist (für Rechtshänder). Entsprechend ist die Anordnung für Linkshänder oben links.

Ein weiteres konstruktiv einfach umzusetzendes Merkmal sieht es vor, dass die Betriebsmodi einstellbar sind, indem den jeweiligen Betriebmodi zugewiesene Adressierungselemente über eine einsteckbare Chipkarte und/oder einen Barcode-Leser und/oder einen Biometrik-Sensor und/oder über eine im Speicher angeordnete Konfigurationstabelle zuweisbar sind. Damit kann das Gerät auf diese Weise zu einen auch den Benutzer identifizierende Daten aufnehmen, was zum Beispiel bei der Verwendung des Geräts im Communicator-Mode oder Standalone-Mode zur Verrechnung der Gesprächskosten erforderlich sein kann. Zum anderen können auf diese Weise auch bestimmte Modi oder Misch-Modi allokiert werden. So kann beispielsweise das Auswählen einer Sendung oder eines Filmes aus einer Programmzeitschrift oder einer Filmübersicht das Gerät unmittelbar in den Video-Mode schalten.

Ein weiteres nicht zu unterschätzendes Merkmal stellen die Abmessungen und das Gewicht des Geräts dar. Besonders geeignet sind Abmessungen der Grösse B5 bis B4, eine Tiefe von weniger als 3 cm und ein Gewicht von unter 1400 Gramm, vorzugsweise von unter 850 g.

Weitere vorteilhafte Ausgestaltungen der Erfindung sind den übrigen Unteransprüchen zu entnehmen.

Ausführungsbeispiele der Erfindung werden nachfolgend anhand einer Zeichnung näher erläutert. Dabei zeigen:
- Figur 1: einen schematischen Aufbau eines mobilen Thin-Clients;
- Figur 2: eine perspektivische Aufsicht auf den mobilen Thin-Client gemäss Figur 1;
- Figur 3: eine Ansicht der Unterseite des mobilen Thin-Clients gemäss den Figuren 1 und 2;
- Figur 4: eine Ansicht der rechten Seite des mobilen Thin-Clients gemäss den Figuren 1 bis 3;
- Figur 5: eine Ansicht der linken Seite des mobilen Thin-Clients gemäss den Figuren 1 bis 4;
- Figur 6: eine Ansicht der hinteren Seitenkante des mobilen Thin-Clients gemäss den Figuren 1 bis 5;
- Figur 7: eine Ansicht der vorderen Seitenkante des mobilen Thin-Clients gemäss den Figuren 1 bis 6;
- Figur 8: eine Ansicht eines in einen ersten Ständer eingestellten mobilen Thin-Client gemäss den Figuren 1 bis 7; und
- Figur 9: eine Ansicht eines in einen zweiten Ständer eingestellten mobilen Thin-Clients.

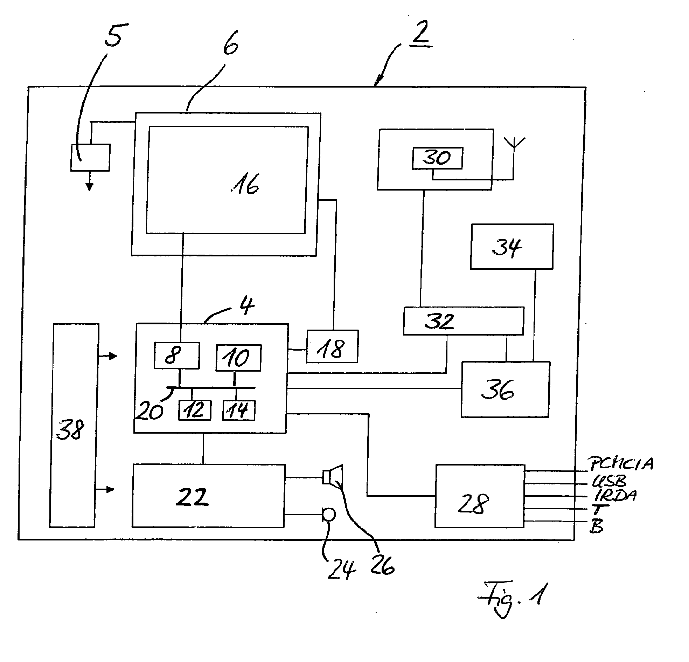

Die Figur 1 zeigt den schematischen Aufbau eines mobilen Informations- und Datenverarbeitungsgeräts, das im folgenden als mobiler Thin-Client 2 bezeichnet wird. Die eigentlichen Kernkomponenten des mobiler Thin-Clients 2 sind ein Prozessorteil 4 und ein Touch-Screen 6. Der Prozessorteil 4 umfasst eine CPU 8, einen DSP/MPEG-Signalprozessor 10, einen RAM-Speicher 12 und einen Flash-Speicher 14. Als CPU 8 ist ein 32-bit RISC-Prozessor mit 206 MHz mit sehr niedrigem Energieverbrauch verwendet, wie er z.B. unter dem Namen StrongARM SA 1110 am freien Markt erhältlich. Der RAM-Speicher hat vorliegend eine Grösse von 64 MB, die Speicherkapazität des Flash-Speichers 14 beträgt vorliegend 32 MB. Die einzelnen Komponenten des Prozessorteils 4 sowie alle weiteren datenverarbeitenden und noch zu beschreibenden Komponenten sind an einem Bussystem 20 angekoppelt.

Der Touch-Screen 6 hat eine Grösse von 8.4 Inch und wird mit einem resistiven Stift (Pen-Eingabe) und/oder mit Fingertips bedient und von einer Touch-Control-Einheit 18 kontrolliert. Das Touch-Screen 6 ist zugleich ein LCD-Flachbildschirm 16 mit aktiver Matrix, SVGA-Auflösung von 800x600 Pixel und 16-bit Farbtiefe. Der mit diesem Eigenschaften versehene LCD-Flachbildschirm 16, der zur Hinterleuchtung über einen Back-Light-Invertor 5 verfügt, eignet sich daher hervorragend, um aus dem Internet geladene Informationen anzeigen und bedienen zu können. Die hier vorgegebene Auflösung erlaubt bereits bei dieser Grösse die annähernd vollständige Darstellung ganzer Seiten und trägt damit ganz bedeutend zur hohen Bedienerfreundlichkeit des mobilen Thin-Clients 2 bei.

Weiter ist ein ebenfalls am Bussystem 20 angeschlossener Sprachteil 22 mit Mikrofon 24 und Lautsprecher 26 vorgesehen, mit dem es u.a. erlaubt ist, Telefonate zu führen und zu empfangen. Für den Anschluss von weiteren externen Geräten und/oder Datenquellen ist ein Schnittstellenmodul 28 vorgesehen, das den Betrieb von PCMCIA-, USB- und IRDA-Schnittstelle ermöglicht und Anschlussmöglichkeiten für eine externe Tastatur T und einen externen Bildschirm B vorsieht.

Für die drahtlose Kommunikation ist eine nach dem Standard IEEE 802.11a oder IEEE 802.11b arbeitende
Sende/Empfangseinheit 30 innerhalb des Gehäuses liegend angeordnet, wobei der Anschluss an das Bussystem 20 über einen Demultiplexer 32 erfolgt. Dabei wird die
Sende/Empfangseinheit 30 in Form einer PC-Karte in einen entsprechenden Gehäuseslot eingeschoben. Alternativ wird auch eine HomeRF PC-Karte, eine GPRS-PC-Karte, eine HSCSD-PC-Karte, eine Ethernet PC-Karte und ein Modem Analogue V.90 unterstützt. Ein optionaler Weise in den mobilen Thin-Client 2 integrierbares CD/DVD-ROM-Laufwerk 34 ist im vorliegenden Ausführungsbeispiel über eine Decoding-Einheit 36 mit dem Bussystem 20 verbunden und wird über eine zum Demultiplexer 32 bestehende direkte Verbindung gesteuert.

Zur Versorgung aller eine elektrische Leistung aufnehmender Komponenten ist ein wiederaufladbarer Energiespeicher 38 vorgesehen.

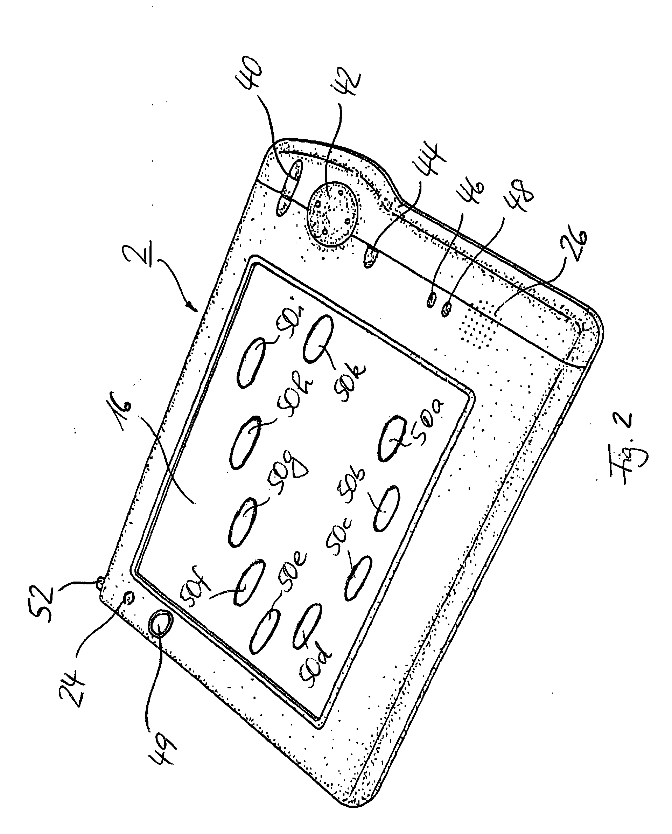

Figur 2 zeigt eine perspektivische Aufsicht auf den mobilen Thin-Client 2, die das Vorhandensein des über die Oberfläche bedienbaren LCD-Flachbildschirms 16 und einiger weniger Bedien- und/oder Anzeigeelemente erkennen lässt. Neben einem Ein/Aus-Schalter 39 ist eine Taste 40 für die Software-Steuerung vorgesehen, die unter dem Betriebssystem Windows CE der rechten Maustaste entspricht. Darunterliegend ist eine Steuertaste 42 angeordnet, die vier Druckpunkte oben, links, rechts und unten aufweist. Die Druckpunkte oben, unten erlauben das Blättern nach oben bzw. unten(scrollen), der Druckpunkt links erlaubt das Abbrechen eines Vorgangs (escape) und der Druckpunkt rechts entspricht der bekannten Enter-Taste (Eingabe/Funktion bestätigen).

Die Steuertaste 42 kann in bestimmten Betriebsmodi, wie z.B. Travel-Mode, E-Book-Mode und Game-Mode, auch die Funktion einer Taumelscheibe für die Navigation durch den dargestellten Bildausschnitt besitzen. Dabei können die Funktionen "Enter" und "Escape" auf Bedienelemente umgeleitet werden oder grundsätzlich in Bedienelementen implementiert sein, die nicht Bestandteil der Taumelscheibe sind. Innerhalb der Steuertaste 42 können diese beiden Funktionen ersatzweise jedoch auch dadurch realisiert werden, dass ein leichter Andruck auf den mittleren Bereich der Steuertaste 42 die Funktion "Enter" auslöst und ein entsprechend starker Andruck auf den mittleren Bereich die Funktion "Escape" auslöst. Die Funktionen "Zoom In" und "Zoom Out" müssten in diesem Fall durch ausserhalb der Steuertaste 42 angeordnete Bedienelemente wahrgenommen werden. Alternativ wäre es auch möglich die Taumelscheibe mit zweistufigen Druckpunkten auszustatten und so auf der ersten Druckstufe die Navigation "Up, Down, Right, Left" zu implementieren und in der zweiten Druckstufe Funktionen wie "Enter", "Escape" und ähnliches zu implementieren, z.B. im E-Book-Mode die Funktionen "Seite vorwärts" und "Seite rückwärts". Die Geschwindigkeit der Navigation kann hierbei durch die Auswertung der Betätigungsdauer erzielt werden, d.h. kurzes Gedrückthalten navigiert langsam, längeres Gedrückthalten führt eher zu einer beschleunigten Navigation. Die Geschwindigkeit der Navigation kann dabei eine linear oder auch exponentiell ansteigende und gegen einen maximalen Geschwindigkeitswert konvergierende Funktion der Betätigungsdauer sein.

Unter der Steuertaste 42 liegend ist eine Tastatur-Ein/Aus-Taste 44 angeordnet, mit der eine Bildschirmtastatur ein-bzw. ausgeblendet werden kann. Zwei Leuchtdioden 46, 48 zeigen die Ladefunktion des Energiespeichers 38 bzw. den Betriebszustand des mobilen Thin-Clients 2 an. Der Lautsprecher 26 und das Mikrofon 24 sind bereits in Figur 1 eingeführt worden. Unterhalb des Mikrofons 24 ist eine Camera 49 angeordnet, die vorliegend in CCD-Technik ausgeführt ist. Diese Camera 49 erlaubt die Übertragung von mit ihr aufgenommenen Bildern beispielsweise im Communicator-Mode. Aus diese Weise lässt sich ein sehr komfortables Bildtelefon verwirklichen.

Mit dem Drücken des Ein/Aus-Schalters 39 wird das Gerät eingeschaltet und ein Startmenü, das vorliegend zehn elipsenartige Schaltflächen 50a bis 50k aufweist, wird auf dem über die Oberfläche bedienbaren LCD-Touchscreen 16 eingeblendet. Mittels dieser Schaltflächen 50a bis 50k lassen sich diverse Betriebsmodi des mobilen Thin-Clients 2 durch das Tippen auf die entsprechende Schaltfläche aktivieren. Grundsätzlich prüft jedoch ein mitgestartetes Programm die Beschaltung des mobilen Thin-Clients 2 und schaltet ihn in einen der Beschaltung entsprechenden Mode, der vom Benutzer wie oben schon beschrieben dann im Startmenü noch geändert werden kann.

Mit der Schaltfläche 50a werden beispielsweise alle laufenden Anwendungen beendet, Schaltfläche 50b ruft die Hilfefunktion auf, Schaltfläche 50c die Setup-Funktion, Schaltfläche 50d die sogenannte InkWriter-Funktion (elektronischer Notizblock, mit dem geschrieben und gezeichnet werden kann), Schaltfläche 50e eine Büro-Funktion (Textverarbeitung, Tabellenkalkulation, Bildschirmpräsentation und Datenbankanwendung, z.B. Microsoft Pocket-Office) und 50f eine Personal-Assistent-Funktion (Aufgaben, Kalender, Kontakte und Posteingang, z.B. Microsoft-Outlook). Dabei entspricht diese Funktion der weiter oben schon einmal genannten PDA-Funktionalität. Mit der Schaltfläche 50g wird eine Internet-Verbindung aufgebaut, ein Web-Browser gestartet und eine voreingestellte Homepage geladen, die Schaltfläche 50h betreibt den mobilen Thin-Client 2 als Mobil-Telefon (Communicator-Mode) und Schaltfläche 50i aktiviert den Video-Mode. Weitere der in der Beschreibung weiter oben eingeführte Betriebsmodi lassen sich mit der Schaltfläche 50k aktivieren, die ein weiteres Bedienmenü aufruft. Zur Aktivierung der Schaltflächen 50a bis 50k dient neben dem Antippen mit der Fingerspitze (finger tip) auch ein seitlich im Gehäuse einsteckbarer Zeigestift 52 (pen).

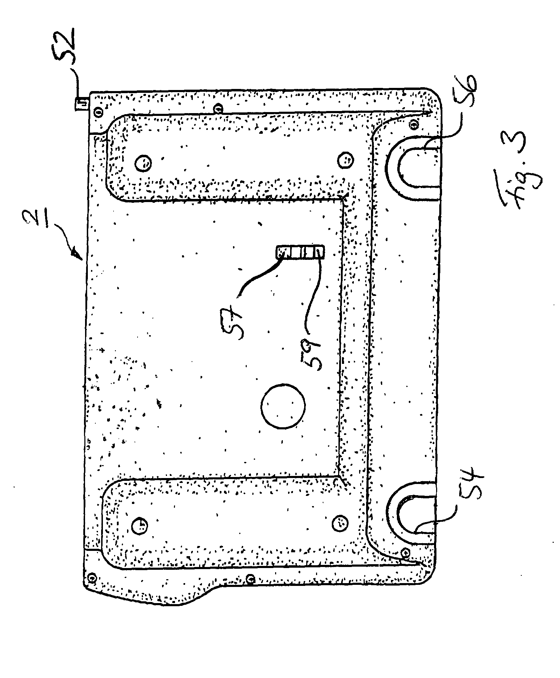

Figur 3 zeigt eine Ansicht der Unterseite des mobilen Thin-Clients 2. Diese Unterseite verfügt über zwei Aufnahmen 54, 56, die es erlauben, den mobilen Thin-Client 2 auf entsprechend gegengleich ausgebildete, hier jedoch nicht weiter dargestellte Scharnierelemente aufzustecken. In den Aufnahmen 54, 56 sind zugleich Kontaktelemente für die Stromversorgung des mobilen Thin-Clients 2 und für die Datenübertragung an den mobilen Thin-Client 2 angeordnet. Weitere Kontaktelemente 57, 59 sind ebenfalls rückseitig vorgesehen, um den mobilen Thin-Client 2 beispielsweise schräg liegend in einer hier nicht weiter dargestellten Ladeschale zu lagern und dabei aufzuladen.

Wenn der mobile Thin-Client 2 auf diese Scharnierelemente aufgesetzt ist, erkennt die Prozessoreinheit 4 diesen Zustand und schaltet den mobilen Thin-Client 2 in den Screen-Mode. Der mobile Thin-Client 2 dient dann für ein anderes Datenverarbeitungsgerät als Bildschirm. Zugleich kann das andere Datenverarbeitungsgerät auch auf die übrigen Systemresourcen des mobilen Thin-Clients 2 zugreifen. Die so beschriebenen Scharnierelemente können beispielsweise an einem Laptop oder PC angeordnet sein, so dass der mobile Thin-Client 2 der abnehmbare Deckel dieser Geräte sein kann.

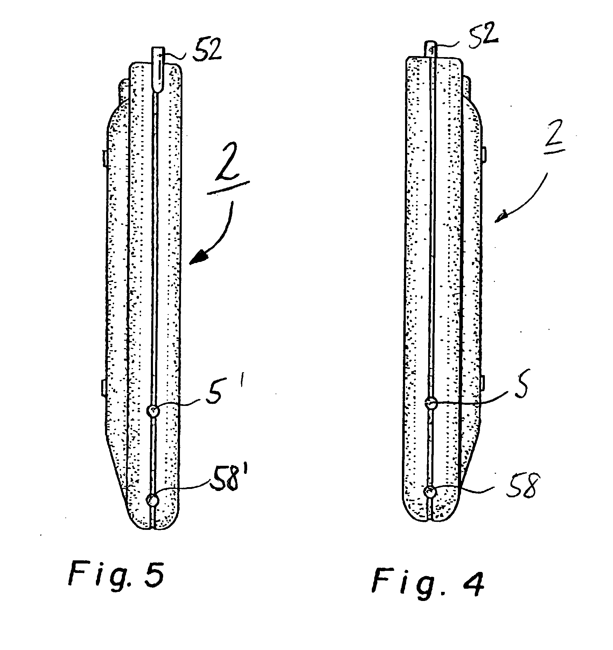

In der in Figur 4 gezeigten Ansicht auf die rechte Seitenkante des mobilen Thin-Clients 2 sind Kontaktelemente 57, 58 erkennbar, mit denen der mobile Thin-Client 2 auf Kontaktelemente eines hier nicht weiter dargestellten Ständers aufgesetzt werden kann. Weil der mobile Thin-Client 2 hier hinsichtlich seines LCD-Touchscreens 16 senkrecht ausgerichtet ist, wird der Darstellungsmodus Buchseite gewählt, der dem Betriebsmodus E-Book zugeordnet ist. Der Betriebsmodus E-Book wird vorliegend am Beaufschlagen der Kontaktelemente 57, 58 erkannt. In analoger Weise verfügt der mobile Thin-Client 2 auch auf der linken Geräteseite über ein korrespondierendes Paar von Kontaktelementen 57', 58', deren Beaufschlagen mit einem geeigneten Kontaktpaar des Ständers ebenfalls den Betriebsmodus E-Book auslöst, jedoch die Darstellung entgegen der vorstehend beschriebene Variante hinsichtlich der Ausrichtung des LCD-Touchscreens 16 anpasst.

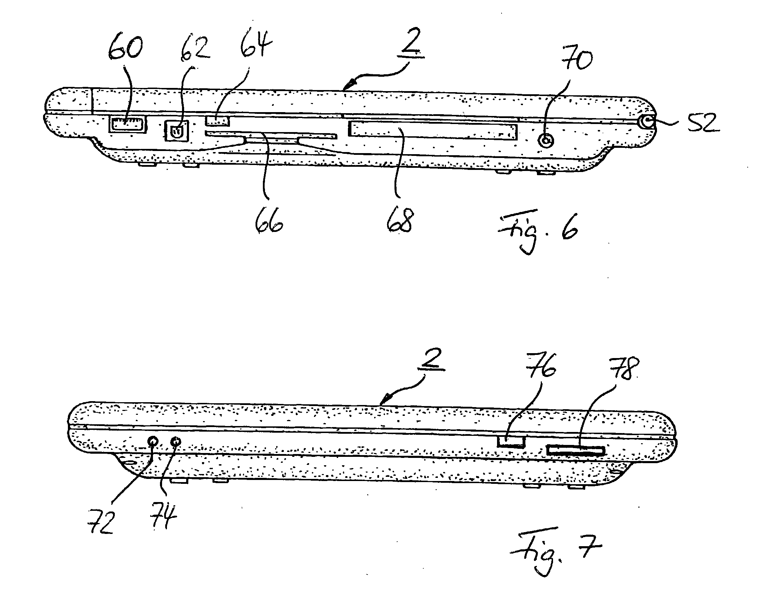

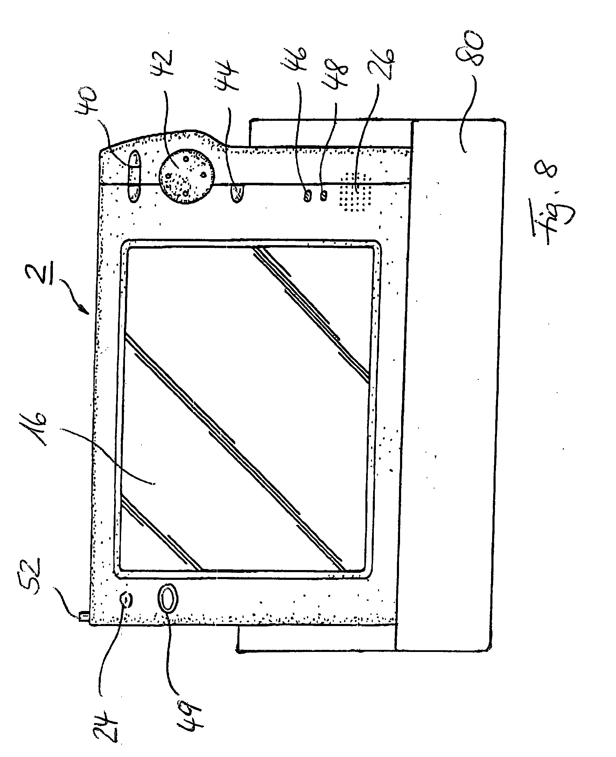

Figur 6 zeigt eine Ansicht der Rückseite des mobilen Thin-Clients 2, auf der eine Vielzahl von Anschlussmöglichkeiten für externe Komponenten zur Kommunikation und/oder zur Stromversorgung angeordnet sind. Der Reihe nach von links nach rechts gesehen sind im Einzelnen eine serielle Schnittstelle 60, eine USB-Schnittstelle 62, eine Infrarotschnittstelle 64, ein Einschub 66 für Smart-Cards, ein weiterer Einschub 68 für PC-Cards und ein Netzadapteranschluss 70 rückseitig angeordnet. Dabei eignet sich die serielle Schnittstelle 60 als RS-232-Schnittstelle oder auch als Kopfhörer/Mikrofon-Interface für sogenannte Lumberg-Stecker, wie sie bei Mobiltelefonen verwendet werden (Anschluss eines Audio-Headsets für Mobiltelefonie). Die Infrarotschnittstelle 64 ist für die Verbindung zu einem Drucker oder zu einem modemfähigen Mobiltelefon zur Herstellung einer Internet-Verbindung geeignet. Der Einschub 66 für die Smart-Card arbeitet nach ISO7816 (part 1 bis 3). Der weitere Einschub 68 dient im besonderen dazu, eine WLAN-Verbindung nach IEEE802.11b herzustellen, wobei das Equipment hierfür beispielsweise unter dem Namen "I-Gate" von der Siemens AG erhältlich ist.

Mit dem entsprechenden Betätigen einer der Schaltflächen 50a bis 50k und/oder der aktuellen Beschaltung des mobilen Thin-Clients 2 auf der Rückseite stellt der mobile Thin-Client 2 softmässig fest, welcher Betriebsmodus von dem Bediener des Geräts gewünscht wird. So ist beispielsweise der Empfang von MPEG4-codierten Daten an der WLAN-Schnittstelle eindeutig der Auslöser dafür, den mobilen Thin-Client 2 in den Video-Mode zu schalten. Die mit einer durchschnittlichen Datenrate von 5 Mbps eintreffenden Videosignale werden zur Glättung von Schwankungen in der Übertragungsrate im RAM-Speicher 12 gebuffert umso eine gleichmässige Bildrate bei der Wiedergabe der Videosignal auf dem LCD-Touchscreen 16 zu gewährleisten.

Während dieses Betriebsmodes sind alle hierfür nicht benötigten Komponenten stromlos geschaltet, indem sie von einer hier nicht weiter dargestellten Steuerlogik hochohmig von der Stromversorgung (Energiespeicher 38) abgeschaltet. Auf diese Weise ist es sichergestellt, den mobilen Thin-Client 2 möglichst lange ohne externe Stromversorgung betreiben zu können. Im Ausführungsbeispiel ist der Energiespeicher 38 als Lithium-Akku mit einer Kapazität von 2800 mAh ausgeführt, was bis zu einer Betriebsdauer von etwa 7 Stunden bei vollgeladenem Energiespeicher 38 ausreicht.

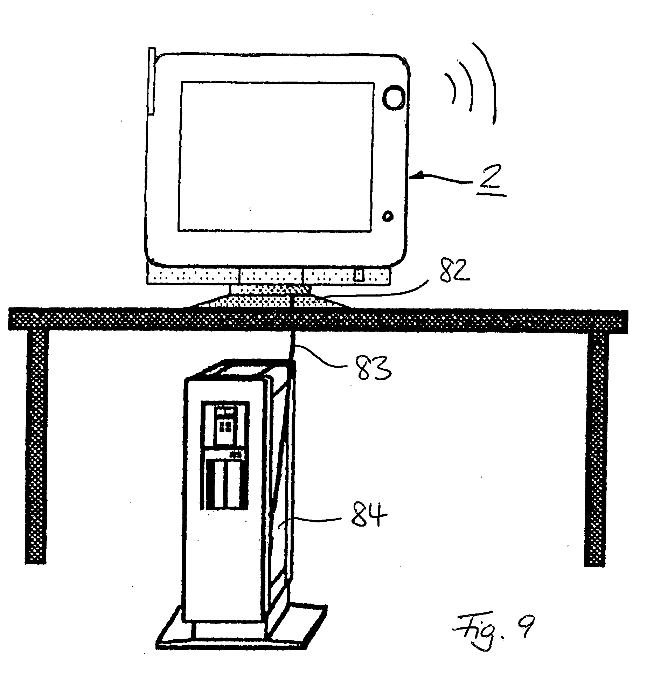

Figur 7 zeigt nun entsprechend die Vorderseite des mobilen Thin-Clients 2, auf der neben Kontaktelementen 72, 74 eine weitere Infrarotschnittstelle 76 (IrDA V1.1) und eine Schnittstelle 78 zur Übermittlung von Videodaten angeordnet sind. Wenn nun der mobile Thin-Client 2 - wie in Figur 8 gezeigt - in einen ersten Ständer 80 eingestellt wird, wobei in dem ersten Ständer ein hier nicht weiter dargestelltes Ladegerät für den Energiespeicher 38 integriert ist, dann schaltet der mobile Thin-Client 2 automatisch in den Status "Energiespeicher laden" und ist vorliegend im Stand-By-Zustand für den Betriebsmode "Screen-Mode". Werden über die Schnittstelle 78 nun entsprechende Videosignale empfangen, aktiviert sich der Screen-Mode und der mobile Thin-Client 2 dient als Bildschirm für eine anderes Datenverarbeitungsgerät. Alternativ zu der Datenübertragung über die Schnittstelle 78 könnte die Übertragung der Videosignale - wie schon weiter oben voranstehend erläutert - auch drahtlos erfolgen.

Eine weitere mögliche Einsatzvariante für den mobilen Thin-Client 2 ist in Figur 9 dargestellt, die den mobilen Thin-Client 2 in einen zweiten Ständer 82 eingestellt zeigt. Mittels dieses Ständers 82 besteht eine Datenverbindung 83 zu einem Tower-PC 84, für den der mobile Thin-Client 2 hier - in seinen Screen-Mode geschaltet - als Bildschirm dient. Darüberhinaus benutzt der Tower-PC 84, der als Stand-Alone oder innerhalb eines Netzwerkes betreibbar ist, die Systemresourcen des mobilen Thin-Clients 2. Im besonderen stellt der mobile Thin-Client 2 für den Tower-PC 84 die für die drahtlose Datenübermittlung erforderlichen Mittel bereit, wie z.B. WLAN nach IEEE 802.11b.

Auf diese Weise wird ein erheblicher Montage- und Wartungsaufwand beim Tower-PC 84 eingespart, weil der mobile Thin-Client 2 sehr viel leichter zugänglich ist und entsprechende Modifikationen von Komponenten, beispielsweise der Austausch von PC-Cards oder PCMCIA-Typ II-Karten, in besonders gut zugänglicher Weise durchgeführt werden kann. Gerade die Kombination dieser beiden Geräte (mobile Thin-Client 2 und Tower-PC 84) ermöglicht es sogar, den Tower-PC 84 eher als Server zu betreiben, d.h. dort einfach nur eine hohe Rechen- und Speicherleistung bereitzustellen, und den mobilen Thin-Client 2 seinem Namen gemäss als als mobiles Terminal mit vergleichsweise begrenzter Rechen- und Speicherleistung, aber mit demgegenüber hervorragenden Datenaustauschfähigkeiten zu betreiben. Hierzu kann natürlich anstelle der kabelgestützten Datenverbindung 83 dann die Datenübermittlung zwischen dem mobilen Thin-Client 2 und dem Tower-PC 84 drahtlos vorgesehen sein. Bei entsprechender Ausgestaltung des Tower-PC 84 können so sogar eine ganze Anzahl von mobilen Thin-Clients 2 darauf zugreifen. Auf diese Weise verringert sich die Anzahl von separat zu administrierenden PC's drastisch, was sich vorteilhaft auf die Kosten für den Unterhalt eines IT-Netzwerkes auswirkt.

### Bezugszeichenliste

- 2: mobiler Thin-Client
- 4: Prozessorteil
- 5: Back-Light-Invertor
- 6: Touch-Screen
- 8: CPU
- 10: DSP/MPEG-Signalprozessor/Grafik-Prozessor
- 12: RAM-Speicher
- 14: Flash-Speicher
- 16: LCD-Flachbildschirm
- 18: Touch-Control-Einheit
- 20: Bussystem
- 22: Sprachteil
- 24: Mikrofon
- 26: Lautsprecher
- 28: Schnittstellenmodul
- 30: Sende/Empfangseinheit (IEEE 802.11a oder b)
- 32: Demultiplexer
- 34: CD/DVD-ROM Laufwerk
- 36: Decoding-Einheit
- 38: wiederaufladbarer Energiespeicher
- 39: Ein/Aus-Schalter
- 40: Taste für Softwaresteuerung
- 42: Steuertaste
- 44: Tastatur-EIN/AUS-Taste
- 46, 48: Leuchtdioden
- 49: CCD-Camera
- 50a bis 50k: Schaltflächen
- 52: Zeigestift
- 54, 56: Aufnahmen
- 57, 58: Kontaktelemente
- 57', 58': korrespondierende Kontaktelemente
- 60: serielle Schnittstelle
- 62: USB-Schnittstelle
- 64: Infrarotschnittstelle
- 66: Einschub für Smart-Card
- 68: Einschub für PC-Card
- 70: Netzadapteranschluss
- 72, 74: Kontaktelemente
- 76: Infrarotschnittstelle
- 78: Schnittstelle für Videodaten
- 80: erster Ständer
- 82: zweiter Ständer
- 83: Datenverbindung
- 84: Tower-PC

- B: externer Bildschirm
- IRDA: IRDA-Schnittstelle
- PCMCIA: PCMCIA-Schnittstelle
- T: externe Tastatur
- USB: USB-Schnittstelle

## Patentansprüche

1. Tragbares Informations- und Datenverarbeitungsgerät (2), welches die folgenden über ein Bussystem (20) kommunizierenden Komponenten aufweist:
a) einen zur permanenten oder temporären Ablage von Daten vorgesehenen Speicher (12, 14),
b) einen zur Verarbeitung von Daten vorgesehenen Prozessor (8, 10),
c) einen über die Oberfläche bedienbaren und an die Darstellung von ganzen Internet-Seiten weitgehend grössenangepassten Flachbildschirm (16),
d) eine Energieversorgung mit einem Energiespeicher (38),
e) Kontaktelemente (57, 57', 58, 58', 72, 74) und periphere Schnittstellen (IRDA, PCMCIA, USB) zu externen Einheiten (84), und
f) wenigstens eine Sende-/Empfangseinheit (30) für eine drahtlose Datenübertragung,
wobei das tragbare Informations- und Datenverarbeitungsgerät (2) für sich allein offline zumindest mit PDA-Funktionalität betreibbar ist, und wobei das tragbare Informations- und Datenverarbeitungsgerät (2) an eine oder mehrere der externen Einheiten (84) ankoppelbar ist und abhängig von an den peripheren Schnittstellen (IRDA, PCMCIA, USB) angekoppelten externen Einheiten (84) und/oder abhängig von an den Kontaktelementen (57, 57', 58, 58', 72, 74) angekoppelten externen Einheiten (84) und/oder abhängig von den mit der Sende-/Empfangseinheit (30) kommunizierenden externen Einheiten und/oder der von diesen externen Einheiten (84) adressierten Daten im Speicher (12, 14) vordefinierte Betriebmodi des tragbaren Informations- und Datenverarbeitungsgeräts (2) einstellbar sind.

2. Tragbares Informations- und Datenverarbeitungsgerät (2) nach Anspruch 1,
**dadurch gekennzeichnet, dass**
die Betriebsmodi Standalone-Mode, Standby-Mode, Screen-Mode, Terminal-Mode, Movie-Mode, Communicator-Mode, E-Book-Mode, Travel-Mode und Game-Mode einstellbar sind.

3. Tragbares Informations- und Datenverarbeitungsgerät (2) nach Anspruch 1 oder 2,
**dadurch gekennzeichnet, dass**
nur die im jeweiligen Mode benötigten Komponenten aktiv geschaltet sind.

4. Tragbares Informations- und Datenverarbeitungsgerät (2) nach einem der Ansprüche 1 bis 3,
**dadurch gekennzeichnet, dass**
der Betriebsmodus "Standby" einstellbar ist, indem das tragbare Informations- und Datenverarbeitungsgerät (2) mit einer Ladevorrichtung (80) verbindbar ist und der Energiespeicher (38) entweder über mit der Ladevorrichtung (80) kommunizierende Kontakte (72, 74) oder induktiv aufladbar ist.

5. Tragbares Informations- und Datenverarbeitungsgerät (2) nach einem der Ansprüche 1 bis 4,
**dadurch gekennzeichnet, dass**
der Betriebsmodus Screen-Mode einstellbar ist, indem das tragbare Informations- und Datenverarbeitungsgerät auf einen Ständer (80, 82) aufsetzbar ist und durch mit dem Ständer (80, 82) kommunizierende Kontakte oder induktive oder kapazitive Ankopplung der in den Ständer (80, 82) eingestellte Zustand detektierbar ist.

6. Tragbares Informations- und Datenverarbeitungsgerät (2) nach Anspruch 5,
**dadurch gekennzeichnet, dass**
der Ständer (82) selbst mit einer Datenverarbeitungsanlage (84) verbindbar ist und über eine Schnittstelle (83) von der Datenverarbeitungsanlage (84) erhaltenen Daten für die Darstellung auf dem Flachbildschirm (16) vom Ständer (82) über eine periphere Schnittstelle (78) an das tragbare Informations- und Datenverarbeitungsgerät (2) übertragbar sind.

7. Tragbares Informations- und Datenverarbeitungsgerät (2) nach Anspruch 5,
**dadurch gekennzeichnet, dass**
von einer Datenverarbeitungsanlage (84) für eine Darstellung auf dem Flachbildschirm (16) vorgesehene Daten drahtlos übermittelbar und vorzugsweise über die Sende/Empfangseinheit (30) transferierbar sind.

8. Tragbares Informations- und Datenverarbeitungsgerät (2) nach einem der Ansprüche 5 bis 7,
**dadurch gekennzeichnet, dass**
der Ständer und das tragbare Informations- und Datenverarbeitungsgerät miteinander kommunizierende mechanische Aufnahmeelemente (54, 56) aufweisen, wobei der Ständer in Form von an einem Laptop angebrachten Scharnierteilen realisiert ist.

9. Tragbares Informations- und Datenverarbeitungsgerät nach einem der Ansprüche 5 bis 7,
**dadurch gekennzeichnet, dass**
der Ständer und das tragbare Informations- und Datenverarbeitungsgerät miteinander kommunizierende mechanische Aufnahmeelemente (54, 56) aufweisen, wobei der Ständer in Form von an einem Personal-Computer angebrachten Aufnahmeteilen realisiert ist.

10. Tragbares Informations- und Datenverarbeitungsgerät (2) nach Anspruch 8 oder 9,
**dadurch gekennzeichnet, dass**
der Laptop bzw. der Personal-Computer (84) auf Ressourcen des tragbaren Informations- und Datenverarbeitungsgeräts (2), wie z.B. auf den Prozessor, auf dem Speicher, auf die Grafikkarte, auf die periphere Schnittstellen (PCMCIA, USB, IRDA) und auf die Sende/Empfangseinheit (30), zugreift.

11. Tragbares Informations- und Datenverarbeitungsgerät (2) nach einem der Ansprüche 1 bis 10,
**dadurch gekennzeichnet, dass**
in den Betriebsmodi Terminal-Mode und Movie-Mode die Datenübertragung über die Sende-/Empfangseinheit (30) erfolgt, welche nach einem Übertragungsverfahren gemäss einer Spezifikation IEEE 802.11 arbeitet.

12. Tragbares Informations- und Datenverarbeitungsgerät (2) nach Anspruch 11,
**dadurch gekennzeichnet, dass**
im Betriebsmodus Movie-Mode ein MPEG-4 codiertes Video-Signal oder ein von MPEG-4 abgeleitetes Videosignal übertragbar ist.

13. Tragbares Informations- und Datenverarbeitungsgerät (2) nach Anspruch 11 oder 12,
**dadurch gekennzeichnet, dass**
im Betriebsmodus Movie-Mode die übertragenen Daten in zumindest einem Teilvolumen des Datenspeichers (12), vorzugsweise nach First-In/First-Out-Prinzip, zwischenspeicherbar sind.

14. Tragbares Informations- und Datenverarbeitungsgerät (2) nach einem der Ansprüche 1 bis 13,
**dadurch gekennzeichnet, dass**
die Sende-/Empfangseinheit (30) einen Empfangsteil für terristisch abgestrahlte TV-Programme umfasst.

15. Tragbares Informations- und Datenverarbeitungsgerät nach einem der Ansprüche 1 bis 14,
**dadurch gekennzeichnet, dass**
eine in einem bestimmten Betriebsmodus nicht benötigte Funktionseinheit mittels einer nicht selbst am Bussystem (20) angeschlossene Logikeinheit hochohmig vom Bussystem (20) abschaltbar ist.

16. Tragbares Informations- und Datenverarbeitungsgerät (2) nach einem der Ansprüche 1 bis 15,
**dadurch gekennzeichnet, dass**
der Flächeninhalt des über die Oberfläche bedienbaren Flachbildschirms (16) mindestens 80% einer einem Gerätebenutzer zuwendbaren Gerätequerschnittsfläche beträgt.

17. Tragbares Informations- und Datenverarbeitungsgerät (2) nach einem der Ansprüche 1 bis 16,
**dadurch gekennzeichnet, dass**
der Gerätequerschnitt und der berührungssensitive Flachbildschirm (16) im wesentlichen rechteckig ausgebildet sind und Mittel (57, 57', 58, 58') vorgesehen sind, die Ausrichtung des Flachbildschirms (16) festzustellen und so die auf dem Flachbildschirm (16) gewählte Darstellung ohne Benutzerinteraktion entsprechend der Ausrichtung des Flachbildschirms (16) im Quer- oder Hochformat anzeigbar ist.

18. Tragbares Informations- und Datenverarbeitungsgerät (2) nach Anspruch 17,
**dadurch gekennzeichnet, dass**
das Mittel ein schwerkraftsensitiver oder ein kapazitiver Sensor oder am Geräterand angeordnete Kontaktelemente (57, 57', 58, 58') sind.

19. Tragbares Informations- und Datenverarbeitungsgerät (2) nach einem der Ansprüche 1 bis 18,
**dadurch gekennzeichnet, dass**
die Betriebsmodi einstellbar sind, indem den jeweiligen Betriebmodi zugewiesene Adressierungselemente über eine einsteckbare Chipkarte oder einen Barcode-Leser oder über eine im Speicher angeordnete Konfigurationstabelle zuweisbar sind.

20. Tragbares Informations- und Datenverarbeitungsgerät (2) nach einem der Ansprüche 1 bis 19,
**gekennzeichnet durch** ein Gewicht von unter 1000 Gramm.
